# EUROPEAN PATENT APPLICATION

(11) **EP 2 385 716 A2**
(43) Date of publication of application: **09.11.2011**
(21) Application number: 11275076.5
(22) Date of filing: 04.05.2011
(51) Int. Cl.: H04W 16/02, H04W 16/32, H04W 84/04, H04W 72/04

(54) **Method and apparatus for spectrum allocation for femto and macrocells**

(30) Priority: 06.05.2010 GB 1007534
(71) Applicant: Vodafone IP Licensing Limited, The Connection Newbury Berkshire RG14 2FN (GB)
(72) Inventor: Murray, Eric, Newbury Berkshire RG14 2FN (GB); Mahandrarajah, Panchadcharam, Newbury Berkshire RG14 2FN (GB); Scully, Neil, Newbury Berkshire RG14 2FN (GB)
(74) Representative: Ellis, Lyle John

(57) **Abstract**

In a mobile telecommunications network including at least one macro base station and at least one femtocell, a method of operating the network to minimise or avoid interference on a common frequency spectrum between the macro base station and the at least one femtocell, the method including dividing usage of one or more channels in the frequency spectrum in frequency and/or time for use by the at least one femtocell and the at least one macro base station, such that usage by the at least one femtocell is segregated in time and/or frequency from the macrocell. Preferably dividing the channel usage on the frequency spectrum such that the macrocell utilises the one or more channels at a frequency of M MHz and the one or more femtocells utilise the one or more channels at a frequency of M/2 MHz.

## Description

### Technical Field

The present invention relates to a method of controlling a femtocell, and more particularly to a method of controlling a femtocell in a mobile telecommunications network including macro base stations and femtocells in order to prevent or at least minimise interference by the femtocells. The invention also relates to a femtocell for use in such a mobile telecommunications network and a network element for controlling a femtocell, particularly a radio network element.

### Background to the Invention

There have recently been proposals to allow access to the features and services provided by cellular networks, such as GSM and UMTS networks, other than by accessing those networks in the conventional manner. In this regard, the conventional manner is by signalling between a mobile terminal and a conventional base station (macro base station) that has a dedicated connection to a Mobile Switching Centre (MSC). The MSC is a component of the network which controls radio resource management, in order to ensure that a user is connected to the best base station in terms of signal strength or quality.

It has been proposed to increase network capacity by providing additional special base stations, referred to here as femtocells or access points (APs), for example at a subscriber's home or office. Many different names have been given to femtocells such as access points (APs), home access points (HAPs), pico-base stations and pico-cells, but all names refer to the same apparatus. APs provide short range, localized cellular telecommunications coverage, and are typically purchased by, or rented to, a subscriber to be installed in their house or business premises.

These femtocells may be dedicated network access points, or may be enhanced wireless internet hubs (i.e. providing wireless internet access, as well as wireless telecommunications network access). The range of femtocells is significantly smaller than macro base stations, typically providing coverage to a range less than 100 metres and most typically between 30-50 metres.

Femtocells appear to mobile terminals as conventional macro base stations, and so no modification to the mobile terminals is required to operate with the APs. In other words, the radio link from the AP to the mobile terminals uses the same cellular telecommunication transport protocols as the conventional macro base stations.

Such APs can be installed and provisioned by the end consumer and may have a "closed" list of users who are able to connect to the access point. Where such an AP is installed at residential premises, these users could include the residents of the house, close friends and family as well as regular visitors who are known to the property owner.

By having a "closed" AP, only those users known to the consumer will be allowed to connect to the AP and so the resource is reliably reserved for those users. This contrasts with an "open" AP in which any user who is within the radio coverage of the AP can connect.

An advantage of introducing APs in existing telecommunications networks is that, where sufficient numbers of APs are implemented, the power level of the macro coverage could be reduced, due to a lower demand for the macro-base stations. Power reductions of course result in energy and financial savings, for instance due to less spectrum being required and also less hardware.

A further advantage of using an access point is that it is typically connected to the core network via an IP network. In this situation, existing broadband Digital Subscriber Line (DSL) connections can be used to link mobile terminals with the network core without using the capacity of the radio access network or transmission network of a mobile telecommunications network. In other words, the AP is integrated into a DSL modem/router and uses DSL to backhaul the traffic to the communication network. This provides a high bandwidth and advantageously allows the AP to be capable of delivering services that require high data rates.

A still further advantage is that APs enable mobile network access to be provided in areas where there is no macro radio access network coverage. For example, an AP could provide 3G coverage in an area where there is no macro 3G coverage at all, perhaps only macro GSM coverage. The use of APs is an additional or alternative means for accessing the network, which therefore advantageously increases the network capacity.

However, additional challenges arise in implementing these access points in a well-integrated telecommunications network. In this regard, macrocells are used to provide radio coverage to a large area, and hence macro sites tend to be relatively high power, and to be mounted above the surrounding clutter, such as on a tower or on top of a building. In general, the larger the coverage area that can be achieved by a single site, the better, as this reduces infrastructure costs. Femtocells, on the other hand are low power radio base stations that may be installed by a consumer and used in a similar manner as a WiFi access point. Although the Femtocells are generally intended to only provide coverage within the building in which the Femtocell is located, they may be located in the same geographic area as a macrocell, so that the Femtocell's radio coverage interferes with that of the existing cellular network.

This interference occurs because both the AP and the cellular network are sharing the same frequency resource. Traditionally, when it is desired by an operator to operate different cell types with different transmit power in the same geographic area, and hence with different coverage and capabilities, a layered approach is used whereby each layer uses a separate spectrum allocation to avoid interference from the high power to the low power layer (and vice versa although this is less common).

This, however, is inefficient, since one of the layers may not need all the spectrum that has been reserved for it. This inefficiency consideration is particularly pertinent to the LTE network, currently being developed, as the network configuration sought is that with the greatest efficiency possible. Further, during the early stages of the introduction of LTE, it is envisaged that the number of femto-cells in use may not be high, but growing, since it will also be the early stages of their development. Therefore, inefficiencies in the Femtocell spectrum usage would almost certainly ensue if this technique is adopted for 3GPP LTE.

A further problem of this approach is that it involves an element of frequency planning, which operators in particular would prefer to avoid. It is to be appreciated that this problem is particularly pertinent for open access femtocells, where one or more femtocells are located indoors and the associated terminals are likely to be located outdoors. In this situation, interference between the layers is more of an issue than for, as a comparison, a closed access femtocell, where the femtocell itself and the associated terminals are primarily located indoors. For such a closed access situation, frequency planning may not be required as the building penetration loss will often provide sufficient isolation between the layers. However, interference can be a significant problem for a closed access femtocell if a terminal that cannot access the femtocell is located indoors. Such a terminal will remain connected to the macro cell, but will experience a high level of interference from the femtocell.

An added complication with the separate spectrum allocation is that eventually there is likely to be many more femtocells per unit area than macrocells, and so the capacity of the femtocell layer will need to be much greater than that of the macrocell layer. Hence, it may be desirable to handover traffic onto the femtocell layer (from a capacity viewpoint) that would better be supported (from a radio intereference point of view) on the macrocell layer. In such a scenario, interference between the layers becomes an issue, as that must be avoided.

A further issue with 3GPP LTE is that, in the downlink, it uses OFDMA, which divides the available frequency spectrum into several sub-carriers so that the resources are effectively partitioned in a time-frequency space. Therefore, due to its use of sub-carriers, the 3GPP LTE system provides a different set of interference coordination problems than previous cellular systems.

There is therefore a need for an efficient mechanism for allowing the coexistence of macro base stations and femtocells with no, or at least minimal, interference.

### Brief Summary of the Invention

According to a first aspect of the present invention, there is provided, in a mobile telecommunications network including at least one macro base station and at least one femtocell, a method of operating the network to minimise or avoid interference on a common frequency spectrum between the macro base station and the at least one femtocell, the method including: dividing usage of one or more channels in the frequency spectrum in frequency and/or time for use by the at least one femtocell and the at least one macro base station, such that usage by the at least one femtocell is segregated in time and/or frequency from the macrocell.

In a second aspect, the present invention provides in a mobile telecommunications network including at least one macro base station and at least one femtocell, a method of operating the network to minimise or avoid interference on a common frequency spectrum between the macro base station and the at least one femtocell, the method including: applying a resource allocation scheme to the available resources such that the macrocell is allocated a first subset of the resources and the femtocell is allocated a second subset of the resources.

In a third aspect the present invention provides in a mobile telecommunications network including at least one macro base station and at least one femtocell, a method of operating the network to minimise or avoid interference on a common frequency spectrum between the macro base station and the at least one femtocell, the method including determining whether a mobile terminal communicating through a femtocell is registered with the femtocell, and if so, allowing the mobile terminal to utilise all the available frequency resources; and otherwise, applying a resource allocation scheme such that the resources available to the mobile terminal is a subset of the available resources.

Advantageously, these aspects of the invention offer improved efficiency as macrocell and femtocell layers are able to be operated in a common spectrum block. In particular, these aspects of the invention are considered to be more efficient than enforcing a hard separation between the spectrum allocations for each layer.

Other aspects of the invention are set out in the attached claims. In particular it is to be appreciated that the invention need not only be implemented as a method, but is also applicable to apparatus, particularly as implemented in, or associated with network elements such as the macro base stations.

### Brief Description of the Drawings

The present invention will now be described in relation to the following Figures in which:
Figure 1 illustrates an example mobile telecommunications network including an access point in addition to a conventional base station, in which the embodiments of the present invention may be implemented;
Figure 2 illustrates arrangement according to a first embodiment of the invention; and
Figure 3 illustrates a flow chart for implementing a second embodiment of the invention.

### Detailed Description

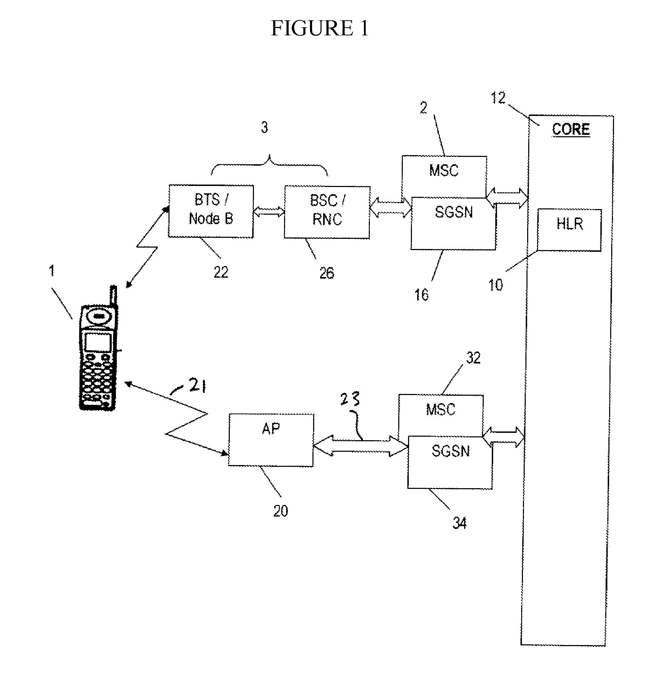

Key elements of a mobile telecommunications network, and its operation, will now briefly be described with reference to Figure 1.

It has also been proposed to use APs in the Long Term Evolution (LTE) telecommunications network currently being developed. LTE is likely to be the next network implementation after 3G. Overall, the invention is applicable to any type of cellular telecommunications system, including GSM, 3G and LTE, but particularly LTE.

Each base station (e.g. base station 3 and AP 20) corresponds to a respective cell of the cellular or mobile telecommunications network and receives calls from and transmits calls to a mobile terminal in that cell by wireless radio communication in one or both of the circuit switched or packet switched domains. Such a subscriber's mobile terminal (UE) is shown at 1. The mobile terminal may be any portable telecommunications device, including a handheld mobile telephone, a personal digital assistance (PDA) or a laptop computer equipped with a datacard.

In the LTE mobile telecommunications network, each macro base station 3 comprises an eNode B, which effectively combines the functionality of the node B and the RNC of the UMTS network. It is proposed that the base stations are arranged in groups and each group of base stations is controlled by a Mobility Management Entity (MME) and a User Plane Entity (UPE).

Conventionally, in a GSM/UMTS network, the base stations are arranged in groups and each group of base stations is controlled by a mobile switching centre (MSC) 2 and an SGSN (Serving GPRS Support Node) 16. MSC 2 supports communications in the circuit switched domain - typically voice calls, and corresponding SGSN 16 supports communications in the packet switched domain - such as GPRS data transmissions. SGSN 16 functions in an analogous way to MSC 2. The base station 3 has a dedicated (not shared) connection to its MSC 2, typically a cable connection. This prevents transmission speeds being reduced due to congestion caused by other traffic.

The embodiments of the invention have particular applicability to the Long Term Evolution (LTE)/ System Architecture Evolution (SAE) currently being developed by the "3rd Generation Partnership Project" (3GPP). In this regard, Long Term Evolution (LTE) is an advanced version of UMTS that uses E-UTRA (Evolved Universal Terrestrial Radio Access), and which employs OFDMA (Orthogonal Frequency Division Multiple Access) on the downlink (eNB to terminal) and SC-FDMA (Single Carrier Frequency Division Multiple Access) on the uplink. The downlink and uplink transmissions organized into radio frames with 10 ms duration and both FDD and TDD are supported.

As mentioned above, data are transmitted in the downlink (DL) by OFDMA. According to OFDMA the available frequency spectrum is divided into several sub-carriers where the resources are partitioned in a time-frequency space, and slots are assigned along an OFDM symbol index and OFDM sub-carrier index. The size of the sub-channels is usually chosen such that it is within the coherence bandwidth. To maximise spectral efficiency, the frequency responses of the sub-carriers are overlapping and orthogonal. The OFDMA are organised into frames of 10ms duration.

With this background in mind, an implementation of an embodiment of the invention will now be described, which addresses potential interference caused by APs and macro-cells (eNBs) sharing spectrum, by dividing the spectrum which each uses for one or more of the channels.

Femtocells and macrocells will each have their own signalling requirements, and therefore can be considered as operating as separate layers within a given spectrum.

In LTE, the spectrum that will be available is expected to be larger than the 2x5 MHz used in current 3G cellular systems. An availability of 2x10 MHz or 2x20 MHz is considered likely. It is also likely that in the final LTE implementation, these two layers will not be synchronised in time, or at least not to the degree that the 10ms frames in each would be synchronised.

Whilst operating the macrocell and femtocell layers with the same system bandwidth in the same spectrum allocation offers improved efficiency, a consequential problem will arise in that the downlink control channels required by the UE during cell search (i.e. the Primary and Secondary Synchronisation Signals ― PSS, SSS and the Physical Broadcast Channel - PBCH) will be located on the same sub-carriers and hence may mutually interfere. If this conflict does occur, the dominant or stronger signal would be the one the UE receives, which may be the femtocell even when connection to the macrocell is preferred. This conflict between the channels is dependent upon the relative timings of the radio frames of the two layers, but is a possibility.

Therefore, in this first embodiment of the invention, to eliminate or at least reduce interference between femtocells and macrocells, division of one or more of these channels is effected for the different cell types. More specifically, to avoid any possibility of interference between one or more downlink channels (e.g. PSS, SSS and PBCH), and more specifically for these important downlink channels, the femtocell layer downlink spectrum allocation is split into a plurality of frequency bands. Ideally the femtocell layer downlink spectrum allocation is split into two frequency bands, with each being half the size of the full frequency band. Allowable bandwidths for LTE are 1.4, 3, 5, 10, 15 and 20 MHz. Any combinations of these are possible, so a 10 MHz band could be split into two 5 MHz bands, or a 5 MHz band could be split into three 1.4 MHz bands. However, the aim is to maximise the bandwidth for the femto-cells, so it is generally desirable to avoid greater than a factor two difference.

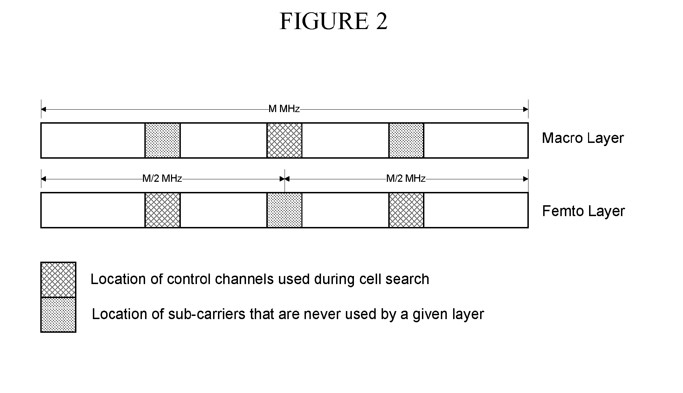

This is illustrated in Figure 2. Figure 2 shows the spectrum allocation for the macro layer, being a single band of frequency M Hz, as well as for the femto layer, which has two bands of frequency M/2 Hz, each of which being co-incident with either the upper or lower half of the spectrum allocation for the macro layer. As indicated above, for LTE, M will typically be 10 or 20 and so M/2 will be 5 or 10 Mhz respectively in these cases. Each femtocell can be allocated one or other of the femtocell layer bands, or, if carrier aggregation techniques are available, both bands could be used. A number of alternative techniques could be used to select which band to use. For example, the bands could be chosen randomly, be user selectable, or could be set based upon interference measurements made by the femto-cell.

Again referring to Figure 2, some of the resource elements within the central 72 sub-carriers carrying the above control channels (i.e. the hatched areas in the above diagram and as defined in the 3GPP standards) may also be available for carrying traffic. However, it is preferable that these resources be reserved for the exclusive use by that layer, and the corresponding resources in the other layer are blocked from being used (i.e. the grey areas in the figure). This would give each layer a minimum capacity that is reserved for its exclusive use.

This arrangement avoids any possibility of interference between the control channels since the control channels of the femto layer cannot overlap with the control channels of the macro layer.

It is to be appreciated that this embodiment of the invention only applies to the downlink, and that the uplink band need not be segmented in this way, since the downlink and uplink bandwidths of LTE are independent. Nevertheless, having said that, for the purposes of interference management, it may be necessary to segment the uplink band. In any case, the uplink traffic load is typically less than the downlink load and hence providing additional uplink resources to a femtocell is unlikely to be useful. To implement this embodiment, it will also be necessary for the UE to recognise that two different layers exist.

According to a second embodiment of the invention, interference in the traffic sub-carriers is addressed in the uplink and/or downlink.

In this regard, in the LTE standard, resource elements are grouped into resource blocks. In frequency, these blocks are 12 sub-carriers wide, totalling 180 kHz, as each sub-carrier is 15kHz. Therefore, where the spectrum available is 5MHz, 25 resource blocks are supported. Similarly, for 10MHz of spectrum, 50 blocks are supported, and for the 20MHz option, 100 blocks are supported.

The Macro layer and the Femto layer are aligned in frequency, and so the resource blocks will also be aligned. To counter the interference problems that may arise due to the two layers using the same spectrum, this embodiment of the invention utilises a resource block allocation scheme, which is controlled by the macrocell, in order to ensure that conflict does not arise in the usage of the resource blocks. In this regard, if one layer avoids using a given resource block, then the corresponding resource block in the other layer will be free from interlayer interference.

More specifically, in this second embodiment of the invention, the macrocell, or a server associated with the macrocell, is responsible for applying a resource block allocation scheme. It is to be appreciated that this embodiment of the invention may be applied to the whole spectrum, or used in conjunction with the first embodiment of the invention described above. Where used in conjunction with the first embodiment of the invention, the resource allocation excludes the sub-carriers being used in that first embodiment, since conflict resolution has already been applied there. In this regard, the macrocell would decide which of the remaining resource blocks would be allocated to the macro layer and/or the femto layer. Also, this embodiment is typically concerned with traffic carriers rather than control carriers, like the first embodiment.

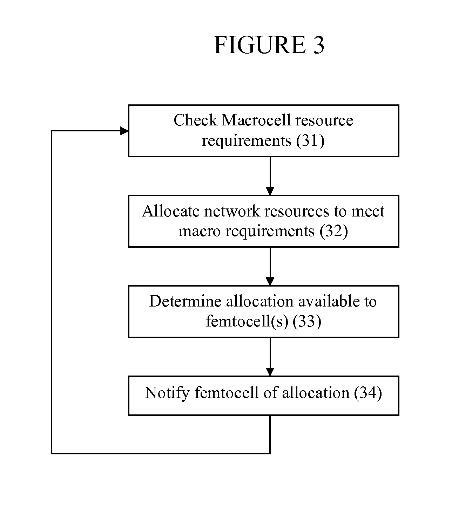

Various allocation schemes of the resource blocks may be utilised. With reference to Figure 3, ideally the macro-cell decides how many resource blocks are required to meet its immediate resource requirements (31) and reserves the necessary number of blocks (32). It is to be appreciated that the macrocell layer may designate some of its traffic to be carried by the femtocell layer due to capacity limitations, and this would ideally be taken into consideration when determining the resource requirements. The remaining blocks may then be allocated to the Femto-cell Layer (33). The macro-cell will preferably periodically review the resource allocation decision in order to account for changes of the traffic load in its coverage area.

When the macrocell makes a new decision as to its resource requirements, this decision needs to be signalled to the femtocell layer (34). This decision can always be signalled by the macrocell or only when a change in the resources available to the femtocells is determined. In this regard, the macrocell maintains a list of femtocells that are located in its coverage area, so that the appropriate femtocells can be notified.

In one configuration, the message notifying the femtocell layer of the resources available will consists of a single bit field, with the state of a single bit representing whether or not the corresponding resource block is required by the macrocell. This is just one possible implementation and other implementations are possible. For instance, to improve the signalling scheme efficiency a number of predefined patterns may be used, which define the availability of the resources blocks. These predefined patterns are also known by the femtocell layer, so that the macrocell layer need only signal an identity corresponding to a pattern to be applied. In this alternative implementation, upon notification of an updated resource allocation mask from the macrocell, the femtocell will then adjust its resource use accordingly. Where terminals are using resources that subsequently become blocked, it will be necessary for the femtocell layer (or applicable femtocell) to reallocate other resources, where possible.

A problem with this second embodiment of the invention is that it is possible for the macrocell layer to reserve the majority of the spectrum for itself, if that would result in optimum system performance. However, operating the system in such a state means that the femtocell layer will have little capacity, and this will have an impact on the quality of service perceived by the owners of the individual femtocells. Since the femtocell owners will have purchased and installed the femtocells to serve their traffic needs, this is particularly undesirable.

Therefore, according a third embodiment of the invention, the resource allocation schemes as described in the second embodiment of the invention are only applied to certain mobile terminals. More specifically, the resource allocation schemes determined by a given macrocell are not applied to mobile terminals which are registered to a femtocell in a region of the macrocell.

This embodiment of the invention is based upon the realisation that the majority of femtocells will be located indoors, and it is also expected that the majority of the terminals registered to use these femtocells will also be located in the same building. Hence, it is likely that these terminals will not be a significant source of interference to the macrocell layer, since the building offers a reasonable degree of isolation.

This embodiment of the invention may be applied to all resource allocations allotted to the femtocell layer, or only once the allocation falls below a predetermined threshold (i.e. below a minimum service level applicable to the femtocell layer).

It is also to be appreciated that in this third embodiment of the invention, may be utilised in conjunction with the first and/or second embodiments of the invention described above (although the femtocell downlink bandwidth should remain at an appropriate fraction of the macrocell bandwidth (e.g. half) unless carrier aggregation techniques are used. Further, where the femtocell is an open AP, the femto-cell scheduler will still be aware of which resources are subject to interference from the macrocell layer, and so be able to schedule other, non-registered terminals appropriately.

The embodiments just described are to be considered illustrative of the invention, as alterations and additions are possible.

For example, the second and third embodiments of the invention are ideally applied to the uplink and downlink, with separate resource requirements decision being made for each.

## Claims

1. In a mobile telecommunications network including at least one macro base station and one or more femtocells, a method of operating the network to minimise or avoid interference on a common frequency spectrum between the macro base station and the one or more femtocells when communicating with a mobile communications terminal, the method including:
dividing usage of the frequency spectrum in the frequency domain into one or more channels having a bandwidth of M MHz, each channel comprising one or more resource blocks, each resource block comprising plurality of subcarriers;
allocating at least one channel to the one or more femtocells and allocating at least one channel to the macro base station;
at least one of channels allocated to the one or more femtocells being in the same spectrum allocation as one or more channels allocated to the macro base station; and
wherein the at least one channel allocated to the one or more femtocells is split into a plurality of frequency bands.

2. The method of claim 1 wherein the one or more channels allocated to the one or more femtocells are split into two frequency bands, each frequency band having a bandwidth of M/2 MHz

3. The method of claim 2 further including allocating a first femtocell to a first M/2 sub-frequency band and allocating a second femtocell to a second M/2 sub-frequency band.

4. The method of claim 1 or 2 further including utilising a carrier aggregation technique to operate the at least one femtocell on a plurality of bands at the allocated frequency.

5. The method of any one preceding claim wherein the frequency band usage is divided for the downlink and/or the uplink.

6. The method of any one preceding claim wherein the frequency band usage is divided for one or more control channels.

7. In a mobile telecommunications network including at least one macro base station and at least one femtocell, a method of operating the network to minimise or avoid interference on a common frequency spectrum between the macro base station and the one or more femtocells when communicating with a mobile communications terminal, the method including:
applying a resource allocation scheme to the available resources such that the macrocell is allocated a first subset of the resources and the femtocell is allocated a second subset of the resources.

8. The method of claim 7 further including determining the resources required by the macrocell and allocating resources to the macrocell sufficient to satisfy that requirement.

9. The method of claim 7 or 8 further including determining whether a mobile terminal communicating through a femtocell is registered with the femtocell, and if so, allowing the mobile terminal to utilise all the available frequency resources; and
otherwise, applying the resource allocation scheme such that the resources available to the mobile terminal is a subset of the available resources.

10. A method of any one of claims 7 to 9 further including, where a change in the resources allocated to the femtocell is made, notifying the femtocell of the change in allocation.

11. In a mobile telecommunications network including at least one macro base station and at least one femtocell, a method of operating the network to minimise or avoid interference on a common frequency spectrum between the macro base station and the one or more femtocells when communicating with a mobile communications terminal, the method including:
determining whether a mobile terminal communicating through a femtocell is registered with the femtocell, and if so, allowing the mobile terminal to utilise all the available frequency resources; and
otherwise, applying a resource allocation scheme such that the resources available to the mobile terminal is a subset of the available resources.

12. In a mobile telecommunications network including at least one macro base station and at least one femtocell, a network element for minimising or avoiding interference on a common frequency spectrum between the macro base station and the at least one femtocell, the network element configured to:
apply a resource allocation scheme to the available resources such that the macrocell is allocated a first subset of the resources and the femtocell is allocated a second subset of the resources.

13. The network element of claim 12 further configured to determine the resources required by the macrocell and allocating resources to the macrocell sufficient to satisfy that requirement.

14. The network element of claim 12 or 13 further configured to determine whether a mobile terminal communicating through a femtocell is registered with the femtocell, and if so, allow the mobile terminal to utilise all the available frequency resources; and
otherwise, applying a resource allocation scheme such that the resources available to the mobile terminal is a subset of the available resources.

15. A network element associated with a macrocell, such as an eNode B, configured to perform the method of any one of claims 1 to 11.
